# EUROPEAN PATENT SPECIFICATION

(11) **EP 1 293 423 B1**
(45) Date of publication and mention of the grant of the patent: **21.03.2007**
(21) Application number: 01307841.5
(22) Date of filing: 14.09.2001
(51) Int. Cl.: B62L 5/00, F16D 51/42

(54) **Bicycle brake**
Fahrradbremse
Frein de bicyclette

(43) Date of publication of application: 19.03.2003
(73) Proprietor: Liu, Jen-Chih, Kaohsiung City (TW)
(72) Inventor: Liu, Jen-Chih, Kaohsiung City (TW)
(74) Representative: Abbie, Andrew Kenneth

(56) References cited:
- FR-A- 1 029 022
- US-A- 1 908 228

## Description

### BACKGROUND OF THE INVENTION

The present invention is related to an improved bicycle brake, and more particularly to a two-stage lockproof brake system of a bicycle.

In a conventional bicycle or motorcycle drum-type brake system, a brake cord is used to outward shift the brake block in the brake drum for abrading the brake drum so as to achieve a braking effect. In actual use, due to improper operation and sudden reaction of the user, the brake is often instantaneously locked. This will result in slippage of the wheel or even falling of the bicycle or motorcycle. Therefore, when instantaneously urgently braking the bike, the brake is often instantaneously locked by the abrupt and excessively great braking force.

In order to solve the problem of slippage of the wheel resulted from instantaneous locking of the brake, the car is equipped with a lockproof brake system. However, there is still no lockproof brake system developed for bicycles and motorcycles.

### SUMMARY OF THE INVENTION

It is therefore a primary object of the present invention to provide an improved bicycle brake in which the two-stage braking effect is truly enhanced.

It is a further object of the present invention to provide the above bicycle brake in which the balanced pressure setting of the first stage of buffering braking force is enhanced and the manufacturing of the components is facilitated.

It is still a further object of the present invention to provide the above bicycle brake in which when second stage of braking force is required, the second stage of braking effect is strongly created. Therefore, when normally braked or emergently braked, the brake system is prevented from being locked so that the safety can be ensured and the braking effect can be quickly achieved.

This object has been solved according to a bicycle brake as defined in claims 1 to 5 .

The present invention can be best understood through the following description and accompanying drawings wherein:

### BRIEF DESCRIPTION OF THE DRAWINGS

Fig. 1 is a perspective exploded view of the present invention;
Fig. 2 shows the pressure adjustment ring of the present invention;
Fig. 3 is a right view according to Fig. 2;
Fig. 4 shows the equalizer of the present invention;
Fig. 5 is a right view according to Fig. 4;
Fig. 6 is a top view according to Fig. 4;
Fig. 7 shows the power disc of the present invention;
Fig. 8 is a right view according to Fig. 7;
Fig. 9 is a top view according to Fig. 7;
Fig. 10 shows the linking member of the present invention;
Fig. 11 is a right view according to Fig. 10;
Fig. 12 is a top view according to Fig. 10;
Fig. 13 shows the present invention in a still state;
Fig. 14 shows the first stage of braking operation of the present invention; and
Fig. 15 shows the second stage of braking operation of the present invention.

### DETAILED DESCRIPTION OF THE PREFERRED EMBODIMENTS

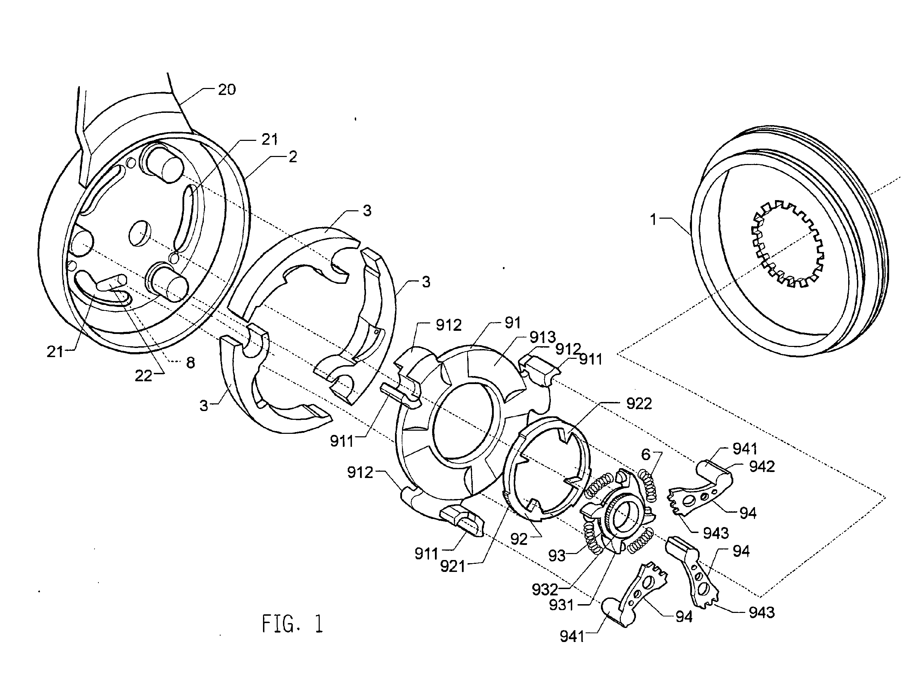

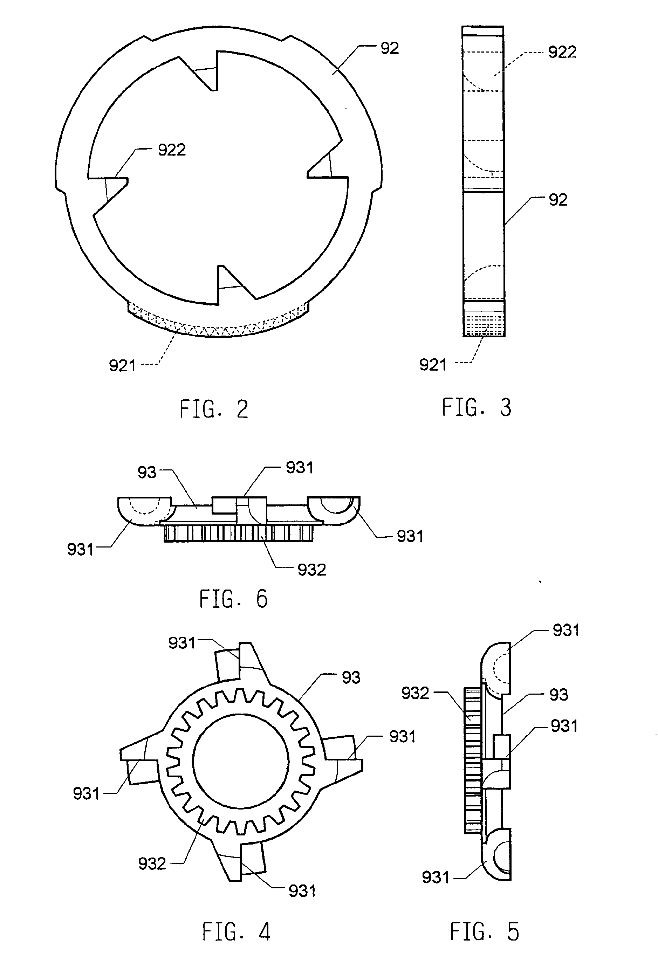

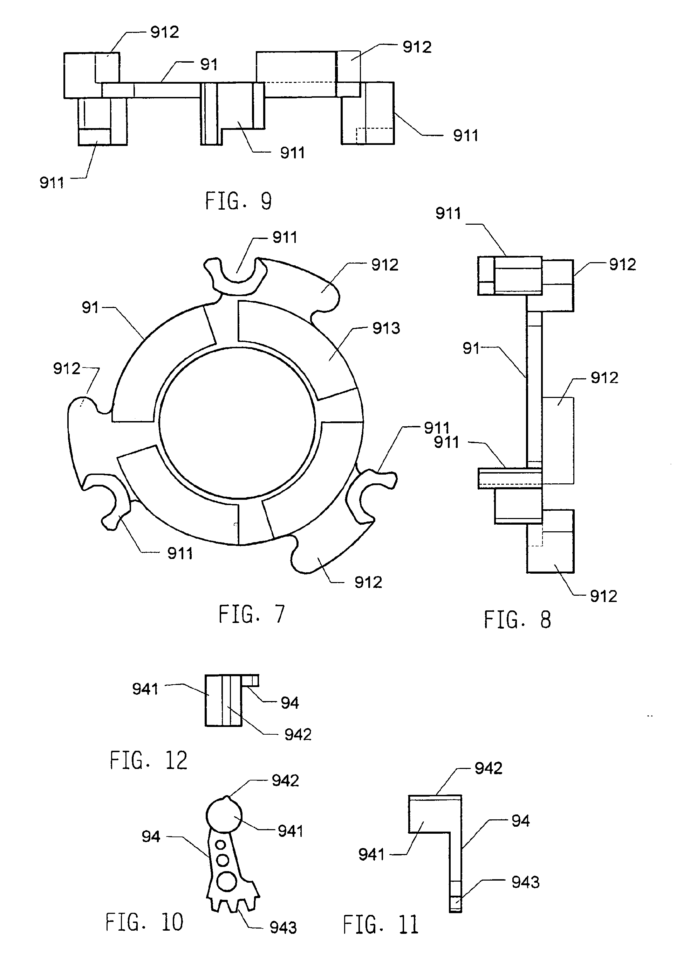

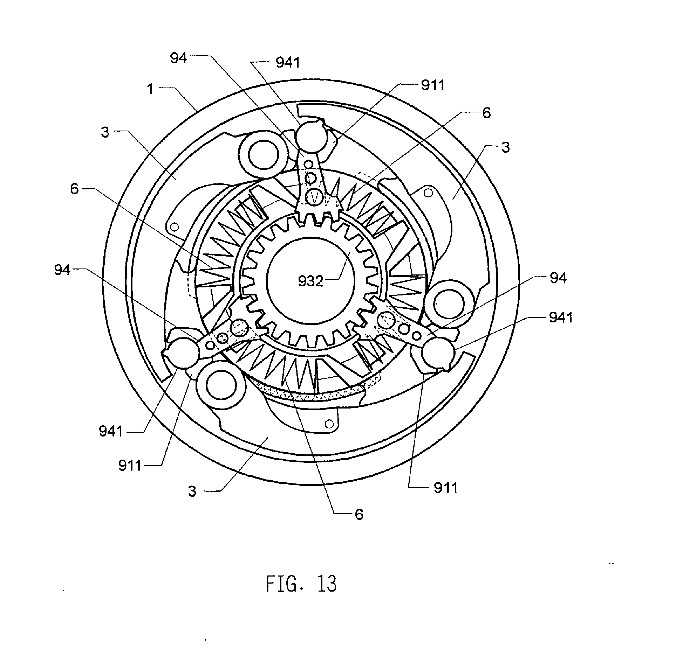

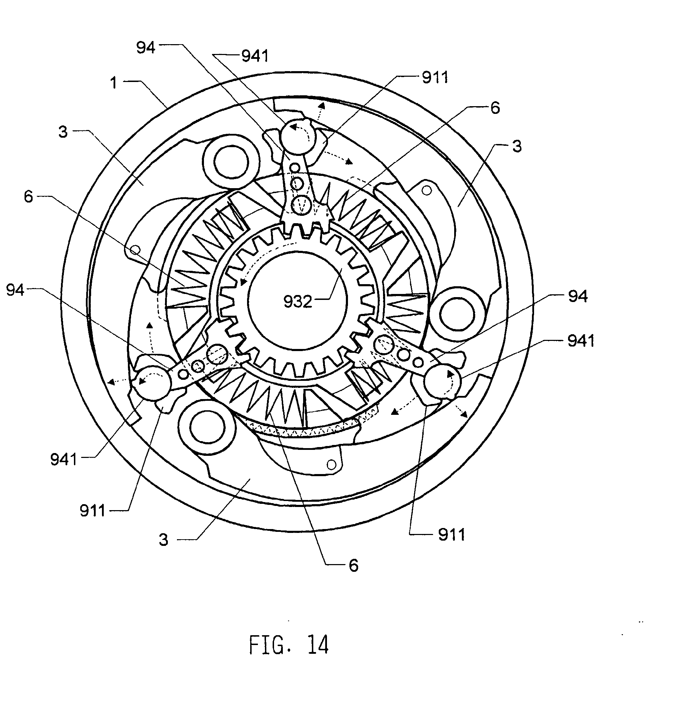

Please refer to Fig. 1. A brake drum 1 assembled with the hub is mated with a hub cover 2 fixed on the bicycle frame by a brake arm 20. A brake mechanism and several brake blocks 3 are disposed in the brake drum 1 and the hub cover 2. The brake mechanism includes a power disc 91 (as shown in Figs. 1 and 7 to 9) driven by the brake cord, a pressure adjustment ring 92 (as shown in Figs. 1 to 3), an equalizer 93 (as shown in Figs. 4 to 6) and at least one linking member 94 (as shown in Figs. 10 to 12). The power disc 91 drives at least one linking member 94 to displace and outward push the brake block 3 to contact with the brake drum 1 for creating a first stage of braking effect (as shown in Fig. 13). When the power disc 91 further rotates and the rotational force is greater than the set resilient pressure value of the resilient member 6 between the equalizer 93 and the pressure adjustment ring 92, the resilient member 6 is forcedly collapsed, whereby the linking member 94 is rotated and displaced to strongly outward push the brake block and create a second stage of braking effect (as shown in Fig. 14). Accordingly, a two-stage safe braking effect is achieved to avoid instantaneous locking of the brake.

Referring to Figs. 2 and 3, the outer circumference of the pressure adjustment ring 92 is formed with toothed face 921 engaged with angle setting pin 8 disposed at the adjustment hole 22. The inner circumference is formed with projections 922 the number of which is equal to that of the resilient members 6. One end of the resilient member 6 abuts against the projection 922.

Figs. 4 to 6 show the equalizer 93 cooperating with the pressure adjustment ring 92. The outer circumference of the equalizer 93 is formed with projections 931 the number of which is equal to that of the resilient members 6. The other end of the resilient member 6 abuts against the projection 931. One side of the equalizer 93 is provided with an engaging gear 932 for engaging with the toothed face 943 of bottom end of the linking member 94.

Referring to Figs. 7 to 9, the outer circumference of the power disc 91 is formed with multiple projecting receiving seats 911. The abutting section 941 of top end of the linking member 94 is located on the receiving seat 911. The receiving seat 911 laterally extends from one side of the power disc 91. The other side is formed with a reversely projecting linking block 912. After assembled, the linking block 912 protrudes from the opening 21 of the hub cover 2 to be driven by external force (brake cord). A lateral face of the power disc 91 is formed with multiple recessed curved faces 913 for escaping the resilient members 6.

Referring to Figs. 10 to 12, the top end of the linking member 94 has a transverse beam-type abutting section 941 located in the receiving seat 911 of the power disc 91. A projecting section 942 is omissibly disposed on the abutting section. The bottom end of the linking member is formed with a toothed face 943 for drivingly engaging with the engaging gear 932 of the equalizer 93 so as to transmit the reaction force between the abutting section 941 and the brake block 3 to the resilient member 6 and receive the pressure equalizing force provided by resilient member 6 via the equalizer 93 in a not braked state (as shown in Fig. 13).

Referring to Fig. 14, when external force (brake cord) drives the power disc 91 to rotate, the power disc 91 via the receiving seat 911 urges the abutting section 941 of the linking member 94 to outward push the brake block 3 to create a first stage of buffering braking effect. (That is, when braked, the reaction force between the abutting section 941 of the linking member 94 and the brake block 3 is not greater than the set pressure balancing value of the resilient member 6.

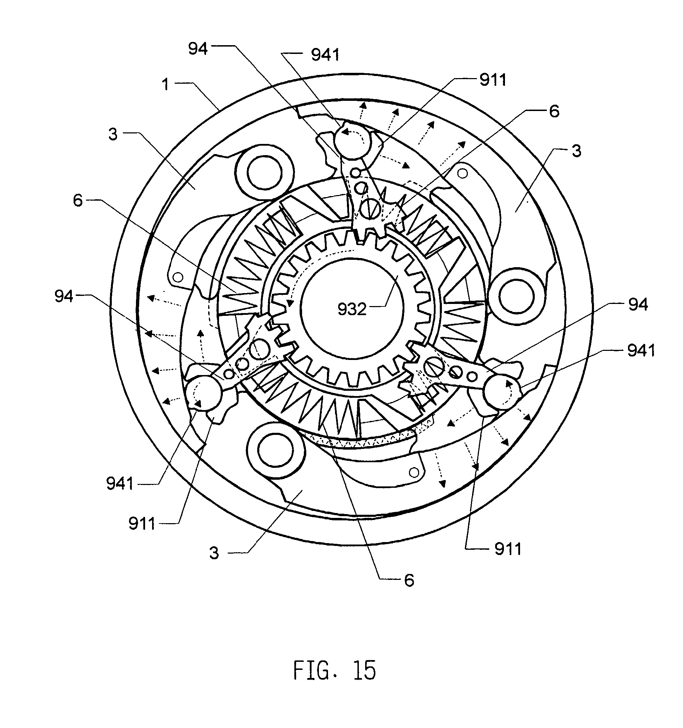

Referring to Fig. 15, when the external force (brake cord) makes the power disc 91 further rotate, the reaction force between the abutting section 941 of the linking member 94 and the brake block 3 is greater than the set pressure balancing value of the resilient member 6. At this time, due to collapse of the resilient member 6, the power disc 91 via the receiving seat 911 urges the equalizer 93 to reversely move. Therefore, the linking member 94 rotates to outward push the brake block and create a strong second stage of safe braking effect.

The present invention has the following advantages:
1. The reaction of two-stage lockproof brake system is truly enhanced so that the braking is more stable and safer.
2. The balanced pressure setting of the resilient member is effectively provided and the manufacturing is facilitated.
3. The quality and safety of two-stage lockproof bicycle brake system is truly enhanced.
4. The operation is speeded and the accuracy of the operation is enhanced.
5. The production efficiency is promoted and the power transmission is simplified.

The above embodiments are only used to illustrate the present invention, not intended to limit the scope thereof. Many modifications of the above embodiments can be made without departing from the scope of the present invention as defined in the following claims.

## Claims

1. Bicycle brake comprising a brake drum (1), assembled with the hub and a hub cover (2), fixed on the bicycle frame by a brake arm (20), and mated with the brake drum, a brake mechanism and several brake blocks (3), being disposed in the brake drum and the hub cover, the brake mechanism including a power disc (91) driven by the brake cord, a pressure adjustment ring (92), an equalizer (93) and at least one linking member (94), the power disc driving at least one linking member (94) to displace and outward push the brake block (3) to contact with the brake drum (1) for creating a first stage of braking effect, when the power disc (91) further rotates and the rotational force is greater than the set resilient pressure value of the resilient member (6) between the equalizer (93) and the pressure adjustment ring (92), the resilient member (6) being forcedly collapsed , whereby the linking member (94) is rotated and displaced to strongly outward push the brake block (3) and create a second stage of braking effect.

2. Bicycle brake comprising a brake drum (1) assembled with the hub and a hub cover (2) fixed on the bicycle frame by a brake arm (20) and mated with the brake drum, a brake mechanism and several brake blocks (3) being disposed in the brake drum and the hub cover, the brake mechanism including a power disc (91) driven by the brake cord, a pressure adjustment ring (92), an equalizer (93) and at least one linking member (94), wherein:
an outer circumference of the pressure adjustment (92) ring is formed with toothed face (921) engaged with angle setting pin (8) disposed at the adjustment hole (22) of the hub cover (2), an inner circumference being formed with first projections (922) the number of which is equal to that of the resilient members (6), one end of the resilient member (6), abutting against the projection (922);
the equalizer (93), cooperates with the pressure adjustment ring (92), the outer circumference of the equalizer (93) being formed with projections (931), the number of which is equal to that of the resilient members (6), the other end of the resilient member abutting against the second projection (931), one side of the equalizer being provided with an engaging gear (932) for engaging with a toothed face (943) of bottom end of the linking member (94);
the outer circumference of the power disc (91) is formed with multiple projecting receiving seats (911), an abutting section (941) of top end of the linking member (94) being located on the receiving seat (911), the receiving seat laterally extending from one side of the power disc, the other side being formed with a reversely projecting linking block (912) driven by external force; and
the top end of the linking member (94) has a transverse beam-type abutting section (941) located in the receiving seat (911) of the power disc, a projecting section (942) being omissibly disposed on the abutting section, the bottom end of the linking member (94) being formed with the toothed face (943) for drivingly engaging with the engaging gear (932) of the equalizer (93).

3. Bicycle brake as claimed in claim 1, wherein the linking member (94) via the equalizer (93) transmits the reaction force between an abutting section (941) of the linking member and the brake block (3) to the resilient member (6).

4. Bicycle brake as claimed in claim 2, wherein the linking member via the equalizer (93) transmits the reaction force between the abutting section (941) and the brake block (3) to the resilient member (6).

5. Bicycle brake as claimed in claim 2, wherein a lateral face of the power disc (91) is formed with multiple recessed curved faces (913) for escaping the resilient members.

## Patentansprüche

1. Fahrradbremse, umfassend eine Bremstrommel (1), welche mit der Nabe zusammengefügt ist, und eine Nabenabdeckung (2), welche auf dem Fahrradrahmen durch einen Bremsarm (20) befestigt und mit der Bremstrommel zusammengefügt ist, einen Bremsmechanismus und mehrere Bremsklötze (3), welche in der Bremstrommel und der Nabenabdeckung angeordnet sind, wobei der Bremsmechanismus eine Kraftscheibe (91), welche durch das Bremsseil angetrieben wird, einen Druckanpassungsring (92), einen Ausgleicher (93) und wenigstens ein Verbindungselement (94) umfasst, wobei die Kraftscheibe wenigstens ein Verbindungselement (94) antreibt, um den Bremsklotz (3) zu versetzen und nach außen zu schieben, um ihn mit der Bremstrommel (1) in Kontakt zu bringen, um eine erste Stufe an Bremswirkung zu erzeugen, wobei, wenn die Kraftscheibe (91) sich weiter dreht und die Rotationskraft größer als der eingestellte elastische Kraftwert des elastischen Elements (6) zwischen dem Ausgleicher (93) und dem Druckanpassungsring (92) ist, das elastische Element (6) erzwungener Weise zusammengeschoben wird, wodurch das Verbindungselement (94) gedreht und versetzt wird, um den Bremsklotz (3) stark nach außen zu schieben und eine zweite Stufe der Bremswirkung zu erzeugen.

2. Fahrradbremse, umfassend eine Bremstrommel (1), welche mit der Nabe zusammengefügt ist, und eine Nabenabdeckung (2), welche am Fahrradrahmen durch einen Bremsarm (20) befestigt und mit der Bremstrommel zusammengefügt ist, einen Bremsmechanismus und mehrere Bremsklötze (3), welche in der Bremstrommel und der Nabenabdeckung angeordnet sind, wobei der Bremsmechanismus eine Kraftscheibe (91), welche durch das Bremsseil angetrieben wird, einen Druckanpassungsring (92), einen Ausgleicher (93) und wenigstens ein Verbindungselement (94) umfasst, wobei:
ein äußerer Umfang des Druckanpassungsrings (92) mit einer gezahnten Stirnseite (921) ausgebildet ist, die mit einem Winkelsetzstift (8) in Eingriff steht, welcher am Anpassungsloch (22) der Nabenabdeckung (2) angeordnet ist, wobei ein innerer Umfang mit ersten Fortsätzen (922) ausgebildet ist, deren Anzahl gleich jener der elastischen Elemente (6) ist, wobei ein Ende des elastischen Elements (6) gegen den Fortsatz (922) anstößt;
der Ausgleicher (93) mit dem Druckanpassungsring (92) zusammenarbeitet, wobei der äußere Umfang des Ausgleichers (93) mit Fortsätzen (931) ausgebildet ist, deren Anzahl gleich jener der elastischen Elemente (6) ist, wobei das andere Ende des elastischen Elements gegen den zweiten Fortsatz (931) anstößt, wobei eine Seite des Ausgleichers mit einem Eingriffszahnrad (932) bereitgestellt ist, um in eine gezahnte Stirnfläche (943) des unteren Endes des Verbindungselements (94) einzugreifen,
der äußere Umfang der Kraftscheibe (91) mit mehrfach vorragenden Aufnahmesitzen (911) ausgebildet ist, wobei ein anstoßender Abschnitt (941) des oberen Endes des Verbindungselements (94) auf dem Aufnahmesitz angeordnet ist, wobei der Aufnahmesitz (911) sich seitlich von einer Seite der Kraftscheibe aus erstreckt, wobei die andere Seite mit einem umgekehrt vorragenden Verbindungsblock (912), der durch eine äußere Kraft angetrieben wird, ausgebildet ist; und
das obere Ende des Verbindungselements (94) einen querliegenden trägerartigen Anstoßabschnitt (941) aufweist, welcher im Aufnahmesitz (911) der Kraftscheibe angeordnet ist, wobei ein vorragender Abschnitt (942) weglassbar auf dem Anstoßabschnitt angeordnet ist, wobei das untere Ende des Verbindungselements (94) mit der gezahnten Stirnfläche (943) ausgebildet ist, um antreibend mit dem Eingriffszahnrad (932) des Ausgleichers (93) in Eingriff zu stehen.

3. Fahrradbremse gemäß Anspruch 1, wobei das Verbindungselement (94) über den Ausgleicher (93) die Reaktionskraft zwischen einem anstoßenden Abschnitt (941) des Verbindungselements und dem Bremsklotz (3) auf das elastische Element (6) überträgt.

4. Fahrradbremse gemäß Anspruch 2, wobei das Verbindungselement über den Ausgleicher (93) die Reaktionskraft zwischen dem anstoßenden Abschnitt (941) und dem Bremsklotz (3) auf das elastische Element (6) überträgt.

5. Fahrradbremse gemäß Anspruch 2, wobei die seitliche Fläche der Kraftscheibe (91) mit mehrfachen vertieften gekrümmten Flächen (913) ausgebildet ist, um den elastischen Elementen zu entgehen.

## Revendications

1. Frein de bicyclette comprenant un tambour de frein (1) relié au moyeu et à un couvercle de moyeu (2) qui est fixé sur le cadre par un bras de frein (20) et qui est accouplé au tambour de frein, étant précisé qu'un mécanisme de freinage et plusieurs mâchoires de frein (3) sont disposés dans le tambour et dans le couvercle de moyeu, que le mécanisme de freinage comprend un disque moteur (91) entraîné par le câble de frein, une bague de réglage de pression (92), un équilibreur (93) et au moins un élément de liaison (94), que le disque moteur entraîne au moins un élément de liaison (94) pour déplacer et pousser vers l'extérieur la mâchoire de frein (3) afin de la mettre en contact avec le tambour (1) et de créer un premier degré d'effet de freinage lorsque le disque (91) continue de tourner et que la force de rotation est supérieure à la valeur de pression élastique réglée de l'élément élastique (6) entre l'équilibreur (93) et la bague de réglage de pression (92), et que l'élément élastique (6) s'aplatit par contrainte, moyennant quoi l'élément de liaison (94) tourne et est déplacé pour pousser fortement vers l'extérieur la mâchoire de frein (3) et créer un second degré d'effet de freinage.

2. Frein de bicyclette comprenant un tambour de frein (1) relié au moyeu et à un couvercle de moyeu (2) qui est fixé sur le cadre par un bras de frein (20) et qui est accouplé au tambour de frein, étant précisé qu'un mécanisme de freinage et plusieurs mâchoires de frein (3) sont disposés dans le tambour et dans le couvercle de moyeu, que le mécanisme de freinage comprend un disque d'entraînement (91) entraîné par le câble de frein, une bague de réglage de pression (92), un équilibreur (93) et au moins un élément de liaison (94), dans lequel :
une circonférence extérieure de la bague de réglage de pression (92) est pourvue d'une face dentée (921) qui vient en prise avec une cheville de réglage angulaire (8) disposée au niveau du trou de réglage (22) du couvercle de moyeu (2), tandis qu'une circonférence intérieure est pourvue de premières saillies (922) dont le nombre est égal au nombre d'éléments élastiques (6), une extrémité de ces éléments élastiques (6) s'appuyant contre la saillie (922) ;
l'équilibreur (93) coopère avec la bague de réglage de pression (92), la circonférence extérieure dudit équilibreur (93) étant pourvue de saillies (931) dont le nombre est égal au nombre d'éléments élastiques (6), l'autre extrémité des éléments élastiques s'appuyant contre la seconde saillie (931) et un côté de l'équilibreur étant pourvu d'un engrenage (932) pour venir en prise avec une face dentée (943) de l'extrémité inférieure de l'élément de liaison (94) ;
la circonférence extérieure du disque moteur (91) est pourvue de plusieurs faces de réception saillantes (911), une section d'appui (941) de l'extrémité supérieure de l'élément de liaison (94) se trouvant sur la face de réception (911), laquelle s'étend latéralement à partir d'un côté du disque moteur tandis que l'autre côté du disque est pourvu d'un bloc de liaison (912) qui fait saillie dans l'autre sens et qui est entraîné par une force extérieure ; et
l'extrémité supérieure de l'élément de liaison (94) a une section d'appui transversale du type flèche (941) qui se trouve dans la face de réception (911) du disque moteur, une section saillante (942) étant prévue de manière optionnelle sur la section d'appui, et l'extrémité inférieure de l'élément de liaison (94) étant pourvue de la face dentée (943) pour l'engrènement d'entraînement avec l'engrenage (932) de l'équilibreur (93).

3. Frein de bicyclette selon la revendication 1, dans lequel l'élément de liaison (94), par l'intermédiaire de l'équilibreur (93), transmet la force de réaction entre une section d'appui (941) de l'élément de liaison et la mâchoire de frein (3) à l'élément élastique (6).

4. Frein de bicyclette selon la revendication 2, dans lequel l'élément de liaison, par l'intermédiaire de l'équilibreur (93), transmet la force de réaction entre la section d'appui (941) et la mâchoire de frein (3) à l'élément élastique (6).

5. Frein de bicyclette selon la revendication 2, dans lequel une face latérale du disque moteur (91) est pourvue de plusieurs faces courbes creusées (913) pour loger les éléments élastiques.
